(19) Europäisches Patentamt
European Patent Office
Office européen des brevets

(11) **EP 4 072 917 B1**

(12) **FASCICULE DE BREVET EUROPEEN**

(45) Date de publication et mention
de la délivrance du brevet:
**06.08.2025 Bulletin 2025/32**

(21) Numéro de dépôt: **20820225.9**

(22) Date de dépôt: **10.12.2020**

(51) Classification Internationale des Brevets (IPC):
***B60W 30/18*** *(2012.01)*

(52) Classification Coopérative des Brevets (CPC):
**B60W 30/18163; B60W 2520/10; B60W 2554/4041;
B60W 2554/4042; B60W 2556/50**

(86) Numéro de dépôt international:
**PCT/EP2020/085633**

(87) Numéro de publication internationale:
**WO 2021/116345 (17.06.2021 Gazette 2021/24)**

(54) **SYSTÈME ET PROCÉDÉ DE PRÉDICTION DE LA TRAJECTOIRE D'UN VÉHICULE**

SYSTEM UND VERFAHREN ZUR VORHERSAGE DER TRAJEKTORIE EINES FAHRZEUGS

SYSTEM AND METHOD FOR PREDICTING THE TRAJECTORY OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.12.2019 FR 1914342**

(43) Date de publication de la demande:
**19.10.2022 Bulletin 2022/42**

(73) Titulaire: **Ampere SAS
92100 Boulogne-Billancourt (FR)**

(72) Inventeurs:
• **GONZALEZ BAUTISTA, David
78210 Saint Cyr l'école (FR)**
• **MILANES, Vicente
92100 Boulogne-Billancourt (FR)**
• **NAVAS MATOS, Francisco Martin
75013 Paris (FR)**

(74) Mandataire: **Renault Group
Renault s.a.s.
1 avenue du Golf
FR TCR AVA 055
78084 Guyancourt Cedex (FR)**

(56) Documents cités:
**WO-A1-2019/204053    US-A1- 2018 037 233**

• **KAZEMI HADI ET AL: "A Learning-Based
Stochastic MPC Design for Cooperative Adaptive
Cruise Control to Handle Interfering Vehicles",
IEEE TRANSACTIONS ON INTELLIGENT
VEHICLES, IEEE, vol. 3, no. 3, 1 September 2018
(2018-09-01), pages 266 - 275, XP011689289,
ISSN: 2379-8858, [retrieved on 20180824], DOI:
10.1109/TIV.2018.2843135**
• **MORADI-PARI EHSAN ET AL: "Utilizing Model-
Based Communication and Control for
Cooperative Automated Vehicle Applications",
IEEE TRANSACTIONS ON INTELLIGENT
VEHICLES, IEEE, vol. 2, no. 1, 1 March 2017
(2017-03-01), pages 38 - 51, XP011655238, ISSN:
2379-8858, [retrieved on 20170630], DOI: 10.1109/
TIV.2017.2708605**

EP 4 072 917 B1

## Description

La présente invention concerne le domaine des dispositifs et procédés de prédiction d'un chemin et/ou d'une trajectoire de véhicule automobile, et des programmes d'ordinateur destinés à la mise en œuvre de tels procédés.

Pour particulièrement, la présente invention concerne le domaine des aides à la conduite d'un véhicule automobile, et notamment l'assistance du conducteur pour activer ou non les systèmes d'aides à la conduite.

Les véhicules automobiles sont aujourd'hui équipés de dispositifs d'assistance à la conduite avancés, dits « advanced driver assistance systems », d'acronyme ADAS en termes anglo-saxons, de plus en plus performants. Un dispositif d'assistance à la conduite avancé a pour but de permettre la conduite autonome d'un véhicule automobile, c'est-à-dire sans intervention de la part du conducteur, ou en partage avec le conducteur du véhicule afin de maintenir le véhicule dans sa voie de circulation et/ou ralentir sa vitesse. En particulier, un dispositif d'assistance à la conduite avancé peut servir à anticiper un chemin et/ou une trajectoire d'un véhicule automobile. Dans la présente demande, le chemin d'un véhicule sera considéré comme une forme géométrique correspondant à la progression du véhicule entre un point de départ et un point d'arrivée. La trajectoire d'un véhicule sera considérée comme l'évolution temporelle de la position du véhicule entre le point de départ et le point d'arrivée.

Les véhicules dits « autonomes » ou à conduite partiellement assistée nécessitent un modèle riche de l'environnement du véhicule afin de permettre à un algorithme de prendre des décisions. Cela est rendu possible grâce à différents capteurs proprioceptifs, tels qu'un accéléromètre, un gyromètre, etc., et extéroceptifs, tels que les caméras, radars, lidars, ultrasons, etc., ainsi que des procédés de fusion de données configurés pour traiter l'information reçue et calculer l'état (position, vitesse, accélération, lacet, etc.) du véhicule et des objets environnants.

Dans de tels véhicules, il est ainsi indispensable de prédire les mouvements du véhicule égo ainsi que d'autres objets mobiles présents dans l'environnement proche dudit véhicule et susceptibles de devenir des obstacles lorsque la trajectoire du véhicule égo vient interférer avec la trajectoire d'un objet.

On connaît, par exemple, les systèmes d'aide au maintien de voie dits « lane keeping assist », d'acronyme « LKA » en termes anglo-saxons qui permettent de repositionner automatiquement le véhicule sur sa voie ou encore les systèmes dits « lane change assist », d'acronyme « LCA » en termes anglo-saxons qui permettent un changement de voie du véhicule.

D'autres exemples d'aide à la conduite sont connus, tels les systèmes d'aide dits « automatic emergency steering » d'acronyme « AES » en termes anglo-saxons capables de détecter les obstacles et de procéder à un braquage d'urgence, la prédiction des trajectoires des objets mobiles permet d'analyser le risque de collision potentiel, ou encore les systèmes d'aide dits « adaptive cruise control », d'acronyme « ACC » en termes anglo-saxons capables de réguler la vitesse et de maintenir automatiquement une distance de sécurité par rapport au véhicule qui précède.

On connait du document EP 3 056 405 - A1, un procédé de commande du changement de voie d'un véhicule égo en fonction d'une première distance entre deux véhicules adjacents au véhicule égo comme cible pour le changement de voie dudit véhicule égo.

Le document WO2019/204053A1 décrit un procédé présentant des inconvénients similaires.

Le principal défaut de ces systèmes d'aide à la conduite réside dans un manque de fluidité de leur réaction de réponse. En effet, il est particulièrement difficile de prédire le comportement des véhicules se trouvant dans les voies adjacentes au véhicule égo, de sorte que le temps de prise de décision de ces systèmes d'aide est particulièrement long.

Il existe donc un besoin d'optimiser le changement de voie d'un véhicule égo d'une voie principale vers une voie adjacente.

Au vu de ce qui précède, l'invention a pour but de permettre la prédiction d'une trajectoire de véhicule automobile en palliant les inconvénients précités.

La présente invention a pour objet un procédé de prédiction de la trajectoire d'un véhicule égo circulant sur une voie principale dans lequel on détermine un changement de voie du véhicule égo de la voie principale vers une voie adjacente en fonction d'une estimation du comportement dynamique d'un groupe de véhicules circulant sur la voie adjacente. Ledit groupe de véhicules comprend au moins un véhicule principal situé à proximité du véhicule égo et un véhicule secondaire situé à l'arrière dudit véhicule égo.

Ainsi, l'évolution du trafic correspondant au comportement dynamique des véhicules sur la voie adjacente à la voie du véhicule égo est prédite afin de prendre une décision de changement de voie.

La prédiction de la trajectoire du véhicule égo est déterminée en fonction du comportement d'un groupe de véhicule présents sur la voie adjacente à la voie de circulation du véhicule égo.

Selon l'invention, on collecte des informations de position, d'orientation et de vitesse du véhicule égo et des véhicules du groupe de véhicule et on établit un modèle dynamique par paires de véhicules consécutifs circulant sur la voie adjacente en fonction des informations collectées. Cela permet d'obtenir un modèle dynamique précis pour chacun des véhicules adjacents en fonction des données des véhicules à proximité sur la même voie de circulation.

Le modèle dynamique par paires de véhicules consécutifs est obtenu en déterminant une fonction de transfert du deuxième ordre correspondant au comportement du véhicule égo par rapport à la paire de véhicules consécutifs considérée en utilisant un modèle de calcul exogène auto autorégressif, « autoregressive exogneous model », d'acronyme « ARX » en termes anglo-saxons, pour obtenir les données dynamiques d'une paire de véhicules consécutifs. Le comportement du véhicule égo dépend de son modèle longitudinal et de son contrôleur longitudinal

La position, l'orientation et la vitesse des véhicules sont obtenues notamment par les différents capteurs proprioceptifs et extéroceptifs d'un système de perception du véhicule égo.

Par exemple, on valide les modèles dynamiques établis en comparant une erreur du modèle de calcul exogène auto autorégressif avec une valeur de seuil dépendant de la vitesse réelle de chaque véhicule à un instant et de la vitesse dudit véhicule à un instant précédent.

Selon un étape ultérieure, on prédit le mouvement des véhicules adjacents en fonction du modèle dynamique validé et de la position initiale desdits véhicules, on prédit le mouvement du véhicule égo en fonction de la prédiction du mouvement des véhicules adjacents et d'informations provenant de capteurs proprioceptifs du véhicule égo et on détermine le changement de voie du véhicule égo en fonction desdites prédictions du mouvement du véhicule et des véhicules adjacents, d'une trajectoire globale du véhicule égo et, par exemple, d'informations provenant d'une cartographie de la route sur laquelle circule le véhicule égo.

L'étape de détermination du changement de voie du véhicule égo permet d'évaluer une fenêtre temporelle adéquate permettant au véhicule égo de changer de voie en toute sécurité.

La consigne de changement de voie du véhicule égo est ensuite transmise à un module d'exécution du changement de voie du véhicule égo.

Dans le cas où il n'y a pas de possibilité pour le véhicule égo de changer de voie, on informe le véhicule égo de la nécessite de de modifier ses paramètres, tels que notamment sa vitesse.

Avantageusement, les étapes du procédé sont répétées jusqu'à ce qu'une possibilité de changement de voie soit trouvée.

Selon un second aspect, l'invention concerne un système de prédiction de la trajectoire d'un véhicule égo circulant sur une voie principale configuré pour déterminer un changement de voie du véhicule égo de la voie principale vers une voie adjacente en fonction d'une estimation du comportement dynamique d'un groupe de véhicules circulant sur la voie adjacente, ledit groupe de véhicules comprenant au moins un véhicule principal situé à proximité du véhicule égo et un véhicule secondaire situé à l'arrière dudit véhicule égo.

Selon l'invention,
le système comprend :

- un module de collecte ou récupération des informations de position, d'orientation et de vitesse du véhicule égo et des véhicules du groupe de véhicule ;
- un module d'estimation d'un modèle dynamique par paire de véhicules consécutifs circulant sur la voie adjacente en fonction des informations collectées. Cela permet d'obtenir un modèle dynamique précis pour chacun des véhicules adjacents en fonction des données des véhicules à proximité sur la même voie de circulation.

Le modèle dynamique par paire de véhicules consécutifs est, par exemple, obtenu en déterminant une fonction de transfert du deuxième ordre correspondant au comportement du véhicule égo par rapport à la paire de véhicules consécutifs considérée utilisant un modèle de calcul exogène auto autorégressif, « autoregressive exogneous model », d'acronyme « ARX » en termes anglo-saxons, pour obtenir les données dynamiques d'une paire de véhicules consécutifs. Le comportement du véhicule égo dépendant de son modèle longitudinal et de son contrôleur longitudinal.

La position, l'orientation et la vitesse des véhicules sont obtenues notamment par les différents capteurs proprioceptifs et extéroceptifs d'un système de perception du véhicule égo.

Avantageusement, le système comprend :

- un module de validation des modèles dynamiques établis en comparant d'une erreur du modèle de calcul exogène auto autorégressif avec une valeur de seuil dépendant de la vitesse réelle de chaque véhicule à un instant et de la vitesse dudit véhicule égo à un instant précédent ;
- un module de prédiction du mouvement des véhicules adjacents en fonction du modèle dynamique validé et de la position initiale desdits véhicules;
- un module de prédiction du mouvement du véhicule égo en fonction de la prédiction du mouvement des véhicules adjacents et d'informations provenant de capteurs proprioceptifs du véhicule égo ; et
- un module de détermination du changement de voie du véhicule égo en fonction desdites prédictions du mouvement du véhicule égo et des véhicules adjacents, d'une trajectoire globale du véhicule égo et, par exemple, d'informations provenant d'une cartographie de la route sur laquelle circule le véhicule égo.

Selon un autre aspect, l'invention concerne un véhicule automobile égo comprenant un système de perception et un système de prédiction de la trajectoire du véhicule égo tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une vue schématique de deux voies adjacentes sur lesquelles circulent un véhicule automobile égo et une pluralité de véhicules adjacents, le véhicule égo comprenant un système de prédiction de la trajectoire selon un mode de réalisation de l'invention;

[Fig 2] représente schématiquement le système de prédiction de la trajectoire d'un véhicule égo selon un mode de réalisation de la figure 1 ; et

[Fig 3] illustre un organigramme d'un procédé de prédiction de la trajectoire d'un véhicule égo selon un mode de réalisation de l'invention mis en œuvre par le système de la figure 1.

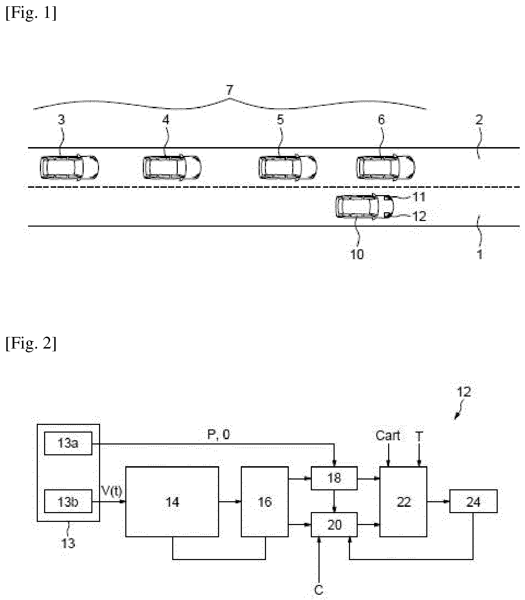

Sur la figure 1, on a représenté de manière très schématique deux voies de circulation 1, 2 adjacentes sur lesquelles circulent des véhicules automobiles dans un même sens de circulation.

Tel qu'illustré, un véhicule automobile égo 10 circule sur la première voie de circulation 1 et quatre véhicules 3, 4, 5, 6 circulent sur la voie adjacente 2 à la première voie.

Les véhicules 3, 4, 5, 6 forment un groupe de véhicule 7 circulant sur la voie adjacente 2 à la voie de circulation 1 du véhicule égo 10.

Le véhicule automobile égo 10 comprend un système 11 de perception de l'environnement dudit véhicule configuré pour détecter le groupe 7 de véhicules circulant dans la voie adjacente 2.

De manière générale, le groupe de véhicule 7 circulant sur la voie adjacente 2 comprend au moins un véhicule principal situé à proximité immédiate du véhicule égo 10 et au moins un véhicule secondaire situé à l'arrière du véhicule égo 10.

Le système de perception 11 permet de détecter le véhicule principal 6 se trouvant sur la voie adjacente 2, à proximité immédiate du véhicule égo 10.

Le système de perception 11 comprend différents capteurs proprioceptifs, tels qu'un accéléromètre, un gyromètre, etc..., et extéroceptifs, tels que les caméras, radars, lidars, ultrasons, etc..., ainsi que des procédés de fusion de données configurés pour traiter l'information reçue et calculer l'état (position, vitesse, accélération, lacet, etc...) du véhicule égo 10 et des objets environnants 7.

La détection du comportement d'un véhicule du véhicule principal 6 permet de déterminer une prédiction des positions des véhicules secondaires 3, 4, 5 situés derrière le véhicule principal 6, dans le sens de circulation des véhicules.

L'oscillation de vitesse du véhicule principal se trouve propagée aux véhicules secondaires, de sorte que plus le nombre de véhicules secondaires est important, plus la capacité de prédiction d'une fenêtre temporelle de changement de voie du véhicule égo 10 sera grande.

La prédiction permet de créer une fenêtre temporelle de changement du véhicule égo 10 en fonction de l'ensemble des véhicules circulants sur la voie adjacente au véhicule égo 10.

Le véhicule égo comprend un système 12 de prédiction de la trajectoire dudit véhicule égo configuré pour émettre une consigne de changement de voie du véhicule égo en fonction d'une estimation du comportement des véhicules circulants dans la voie adjacente 2.

Tel qu'illustré en détails sur la figure 2, le système 12 de prédiction de la trajectoire du véhicule égo 10 comprend un module 13 de détermination de l'état des véhicules 3, 4, 5, 6 circulants sur la voie adjacente 2 au véhicule égo 10.

A cet effet, le module 13 comprend un module 13a de détermination de la position P et de l'orientation O des véhicules 3, 4, 5, 6 circulant sur la voie adjacente 2 au véhicule égo 10, et un module 13b de détermination de la vitesse V des véhicules 3, 4, 5, 6 circulant sur la voie adjacente 2 au véhicule égo 10. La position, P, l'orientation O et la vitesse V des véhicules adjacents sont obtenues notamment par les différents capteurs proprioceptifs et extéroceptifs du système de perception 11 du véhicule égo 10.

Le système 12 de prédiction de la trajectoire du véhicule égo 10 comprend en outre un module 14 d'estimation d'un modèle dynamique des véhicules circulants sur la voie adjacente 2. Le module 14 est configuré pour établir un modèle dynamique par paire de véhicules consécutifs circulants sur la voie adjacente 2. Cela permet d'obtenir un modèle dynamique précis pour chacun des véhicules adjacents en fonction des données des véhicules à proximité sur la même voie de circulation.

Le module 14 d'estimation d'un modèle dynamique des véhicules est configuré pour déterminer une fonction de transfert du deuxième ordre correspondant au comportement d'un véhicule par rapport aux véhicules adjacents. Le comportement du véhicule égo dépend de son modèle longitudinal et de son contrôleur longitudinal.

Le module 14 utilise un modèle de calcul exogène auto autorégressif, « autoregressive exogneous model », d'acronyme « ARX » en termes anglo-saxons, pour obtenir les données dynamiques d'une paire de véhicules consécutifs.

Le modèle de calcul exogène auto autorégressif s'écrit selon l'équation suivante :

$$A(z).y(t) = B(z).u(t - nk) + e(t)$$

Avec:

z, un décalage de temps,
nk, un retard,
u(t), une donnée d'entrée, ici la vitesse du véhicule secondaire précédent,
y(t) une donnée de sortie, ici la vitesse du véhicule principal,
e(t), une valeur d'erreur, et

A(z) et B(z) des polynômes de second d'ordre.

Les polynômes A(z) et B(z) s'écrivent selon les équations suivantes :

$$A(z) = 1 + a1.z^{-1} + a2.z^{-2}$$

$$B(z) = b1 + b2.z^{-1} + b3.z^{-2}$$

Les modèles dynamiques estimés sont ensuite validés dans un module 16 de validation des modèles dynamiques configuré pour valider les modèles dynamiques en fonction de la vitesse V(t) réelle à un instant t et de la vitesse V(t-1) précédente à un instant précédent t-1.

Le système 12 de prédiction de la trajectoire du véhicule égo 10 comprend en outre un module 18 de prédiction du mouvement des véhicules adjacents en fonction du modèle dynamique validé et de leur position initiale et un module 20 prédiction du mouvement du véhicule égo 10 en fonction de la prédiction du mouvement fournie par le module 18 et d'informations provenant de capteurs proprioceptifs C du véhicule égo 10.

Le système 12 de prédiction de la trajectoire du véhicule égo 10 comprend en outre un module 22 de détermination du changement de voie du véhicule égo 10 en fonction des prédictions du mouvement du véhicule égo et des véhicules adjacents et de la trajectoire globale T du véhicule égo 10 et, à titre d'exemple non limitatif, d'informations provenant d'une cartographie Cart de la route sur laquelle circule le véhicule égo.

Le module 22 de détermination du changement de voie du véhicule égo 10 est configuré pour évaluer une fenêtre temporelle adéquate permettant au véhicule égo de changer de voie en toute sécurité.

La consigne de changement de voie du véhicule égo 10 est transmise à un module 24 d'exécution du changement de voie.

Dans le cas où il n'y a pas de possibilité pour le véhicule égo de changer de voie, le module 22 de détermination de changement de voie peut être configuré pour informer le module 20 de prédiction de la trajectoire du véhicule égo 10, en vue notamment de modifier ses paramètres, tels que notamment sa vitesse.

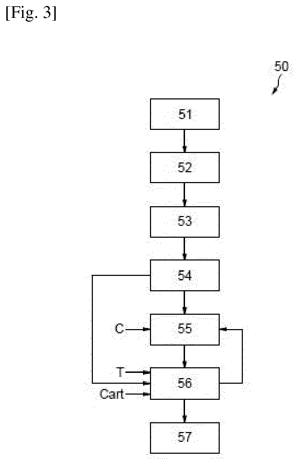

Tel qu'illustré sur la figure 3, le procédé 50 de prédiction de la trajectoire du véhicule égo 10 comprend une étape 51 de détermination de l'état des véhicules 3, 4, 5, 6 circulants sur la voie adjacente 2 au véhicule égo 10.

L'étape 51 de détermination permet de collecter ou récupérer les informations de position P, de l'orientation O et de la vitesse du véhicule égo 10 et des véhicules 3, 4, 5, 6 circulant sur la voie adjacente 2 au véhicule égo 10. La position, P, l'orientation O et la vitesse V des véhicules adjacents sont obtenues notamment par les différents capteurs proprioceptifs et extéroceptifs du système de perception 11 du véhicule égo 10.

Le procédé 50 prédiction de la trajectoire du véhicule égo 10 comprend en outre une étape 52 d'estimation d'un modèle dynamique des véhicules circulants sur la voie adjacente 2. Lors de cette étape 52, on établit un modèle dynamique par paire de véhicules consécutifs circulants sur la voie adjacente 2. Cela permet d'obtenir un modèle dynamique précis pour chacun des véhicules adjacents en fonction des données des véhicules à proximité sur la même voie de circulation.

Le modèle dynamique par paire de véhicules consécutifs est obtenu en déterminant une fonction de transfert du deuxième ordre correspondant au comportement d'un véhicule par rapport aux véhicules adjacents en utilisant un modèle de calcul exogène auto autorégressif, « autoregressive exogneous model », d'acronyme « ARX » en termes anglo-saxons, pour obtenir les données dynamiques d'une paire de véhicules consécutifs. Le comportement du véhicule égo dépend de son modèle longitudinal et de son contrôleur longitudinal. Le modèle de calcul exogène autorégressif est expliqué en référence aux équations Math1 à Math 3 ci-dessus.

Les modèles dynamiques estimés sont ensuite validés à une étape 53 de validation des modèles dynamiques configuré pour valider les modèles dynamiques en fonction de la vitesse V(t) des véhicules réelle à un instant t et de la vitesse V(t-1) des véhicules précédente à un instant précédent t-1. Par exemple, pour valider un modèle dynamique, on compare l'erreur du modèle de calcul ARX avec une valeur de seuil. Si l'erreur est inférieure à ladite valeur de seuil, le modèle dynamique est validé.

Le procédé 50 prédiction de la trajectoire du véhicule égo 10 comprend en outre une étape 54 de prédiction du mouvement des véhicules adjacents en fonction du modèle dynamique validé à l'étape 53 et de leur position initiale.

Le procédé 50 prédiction de la trajectoire du véhicule égo 10 comprend en outre une étape 55 de prédiction du mouvement du véhicule égo 10 en fonction de la prédiction du mouvement fournie à l'étape 53 et d'informations provenant de capteurs proprioceptifs C du véhicule égo 10.

On détermine ensuite, à l'étape 56, le changement de voie du véhicule égo 10 en fonction des prédictions du mouvement du véhicule égo et des véhicules adjacents et de la trajectoire globale T du véhicule égo 10 et d'informations provenant d'une cartographie Cart de la route sur laquelle circule le véhicule égo.

L'étape 56 de détermination du changement de voie du véhicule égo 10 permet d'évaluer une fenêtre temporelle adéquate permettant au véhicule égo de changer de voie en toute sécurité.

La consigne de changement de voie du véhicule égo 10 est transmise, à l'étape 57, à un module 24 d'exécution du changement de voie du véhicule égo 10.

Dans le cas où il n'y a pas de possibilité pour le véhicule égo de changer de voie, on informe le véhicule égo 10 de la nécessite de de modifier ses paramètres, tels que notamment sa vitesse.

Le procédé 50 de prédiction de la trajectoire d'un véhicule égo est répété jusqu'à ce qu'une possibilité de changement de voie soit trouvée.

Grâce à l'invention, l'évolution du trafic sur une voie adjacente à la voie de circulation du véhicule égo est prédite de manière fiable et en temps réel, et permet de prédire une position du véhicule égo après le changement de la voie principale vers la voie adjacente.

Par ailleurs, l'invention permet de prendre en compte les contraintes de la route sur laquelle circule le véhicule égo.

Un tel système et procédé de prédiction de la trajectoire d'un véhicule égo permet de fluidifier le trafic, sans mettre en danger la sécurité du véhicule égo et des véhicules environnants.

### Revendications

1. Procédé (50) de prédiction de la trajectoire d'un véhicule égo (10) circulant sur une voie principale (1) dans lequel on détermine un changement de voie du véhicule égo de la voie principale (1) vers une voie adjacente (2) en fonction d'une estimation du comportement dynamique d'un groupe de véhicules circulant sur la voie adjacente (2), ledit groupe de véhicules (7) comprenant au moins un véhicule principal (6) situé à proximité immédiate du véhicule égo (10) et un véhicule secondaire (5) situé à l'arrière dudit véhicule égo, derrière le véhicule principal (6) dans le sens de circulation, dans lequel on collecte des informations de position (P), d'orientation (O) et de vitesse (V) du véhicule égo (10) et des véhicules (3, 4, 5, 6) du groupe de véhicule (7), **caractérisé en ce que** l'on établit un modèle dynamique par paires de véhicules consécutifs circulant sur la voie adjacente (2) en fonction des informations collectées, le modèle dynamique par paires de véhicules consécutifs étant obtenu en déterminant une fonction de transfert du deuxième ordre correspondant au comportement du véhicule égo par rapport à chaque paire de véhicules consécutifs considérée en utilisant un modèle de calcul exogène autorégressif.

2. Procédé (50) selon la revendication 1, dans lequel on valide les modèles dynamiques établis en comparant une erreur (e(t)) du modèle de calcul exogène auto autorégressif avec une valeur de seuil dépendant de la vitesse réelle (V(t)) de chaque véhicule à un instant (t) et de la vitesse (V(t-1)) dudit véhicule à un instant précédent (t-1).

3. Procédé (50) selon la revendication 2, dans lequel on prédit le mouvement des véhicules adjacents en fonction du modèle dynamique validé et de la position initiale desdits véhicules, on prédit le mouvement du véhicule égo (10) en fonction de la prédiction du mouvement des véhicules adjacents et d'informations provenant de capteurs proprioceptifs (C) du véhicule égo (10) et on détermine le changement de voie du véhicule égo (10) en fonction desdites prédictions du mouvement du véhicule égo et des véhicules adjacents et d'une trajectoire globale (T) du véhicule égo (10).

4. Procédé (50) selon l'une quelconque des revendications précédentes, dans lequel les étapes du procédé (50) sont répétées jusqu'à ce qu'une possibilité de changement de voie soit trouvée.

5. Système (12) de prédiction de la trajectoire d'un véhicule égo (10) circulant sur une voie principale (1) configuré pour déterminer un changement de voie du véhicule égo (10) de la voie principale (1) vers une voie adjacente (2) en fonction d'une estimation du comportement dynamique d'un groupe de véhicules circulant sur la voie adjacente (2), ledit groupe de véhicules (7) comprenant au moins un véhicule principal (6) situé à proximité immédiate du véhicule égo (10) et un véhicule secondaire (5) situé à l'arrière dudit véhicule égo, derrière le véhicule principal (6) dans le sens de circulation, le système comprenant un module (13) de collecte des informations de position (P), d'orientation (O) et de vitesse (V) du véhicule égo (10) et des véhicules (3, 4, 5, 6) du groupe de véhicule (7), **caractérisé en ce qu'**il comprend un module (14) d'estimation d'un modèle dynamique par paire de véhicules consécutifs circulant sur la voie adjacente (2) en fonction des informations collectées, le modèle dynamique par paires de véhicules consécutifs étant obtenu en déterminant une fonction de transfert du deuxième ordre correspondant au comportement du véhicule égo par rapport à chaque paire de véhicules consécutifs considérée en utilisant un modèle de calcul exogène autorégressif.

6. Système (12) selon la revendication 5, comprenant :

   - un module (16) de validation des modèles dynamiques établis en comparant une erreur (e(t)) du modèle de calcul exogène autorégressif avec une valeur de seuil dépendant de la vitesse réelle (V(t)) de chaque véhicule à un instant (t) et de la vitesse (V(t-1)) précédente à un instant précédent (t-1) ;
   - un module (18) de prédiction du mouvement des véhicules adjacents en fonction du modèle dynamique validé et de la position initiale desdits véhicules;
   - un module (20) de prédiction du mouvement du véhicule égo (10) en fonction de la prédiction du mouvement des véhicules adjacents et d'informations provenant de capteurs proprioceptifs (C) du véhicule égo (10) ; et

- un module (22) de détermination du changement de voie du véhicule égo (10) en fonction desdites prédictions du mouvement du véhicule (égo) et des véhicules adjacents et d'une trajectoire globale (T) du véhicule égo (10).

7. Véhicule automobile égo (10) comprenant un système (11) de perception et un système (12) de prédiction de la trajectoire du véhicule égo selon l'une quelconque des revendications 5 ou 6.

**Patentansprüche**

1. Verfahren (50) zur Vorhersage der Trajektorie eines auf einer Hauptspur (1) fahrenden Ego-Fahrzeugs (10), bei dem ein Spurwechsel des Ego-Fahrzeugs von der Hauptspur (1) auf eine benachbarte Spur (2) in Abhängigkeit von einer Abschätzung des dynamischen Verhaltens einer auf der benachbarten Spur (2) fahrenden Fahrzeuggruppe bestimmt wird, wobei die Fahrzeuggruppe (7) mindestens ein Hauptfahrzeug (6), das sich in unmittelbarer Nähe des Ego-Fahrzeugs (10) befindet, und ein Sekundärfahrzeug (5) umfasst, das sich hinter dem Ego-Fahrzeug hinter dem Hauptfahrzeug (6) in Fahrtrichtung befindet, wobei Positions- (P), Orientierungs- (O) und Geschwindigkeitsinformationen (V) des Ego-Fahrzeugs (10) und der Fahrzeuge (3, 4, 5, 6) der Fahrzeuggruppe (7) erfasst werden, **dadurch gekennzeichnet, dass** in Abhängigkeit der erfassten Informationen ein dynamisches Modell pro Paar aufeinanderfolgender Fahrzeuge, die auf der benachbarten Spur (2) fahren, erstellt wird, wobei das dynamische Modell für aufeinanderfolgende Fahrzeugpaare unter Verwendung eines exogenen autoregressiven Berechnungsmodells durch Bestimmung einer Transferfunktion zweiter Ordnung erhalten wird, die dem Verhalten des Ego-Fahrzeugs in Bezug auf jedes betrachtete aufeinanderfolgende Fahrzeugpaar entspricht.

2. Verfahren (50) nach Anspruch 1, bei dem die erstellten dynamischen Modelle validiert werden, indem ein Fehler (e(t)) des exogenen autoregressiven Berechnungsmodells mit einem Schwellenwert verglichen wird, der von der tatsächlichen Geschwindigkeit (V(t)) jedes Fahrzeugs zu einem Zeitpunkt (t) und der Geschwindigkeit (V(t-1)) des Fahrzeugs zu einem früheren Zeitpunkt (t-1) abhängt.

3. Verfahren (50) nach Anspruch 2, bei dem die Bewegung der benachbarten Fahrzeuge in Abhängigkeit des validierten dynamischen Modells und der Ausgangsposition dieser Fahrzeuge vorhergesagt wird, die Bewegung des Ego-Fahrzeugs (10) in Abhängigkeit der Vorhersage der Bewegung der benachbarten Fahrzeuge und von Informationen, die aus

propriozeptiven Sensoren (C) des Ego-Fahrzeugs (10) stammen, vorhergesagt wird und der Spurwechsel des Ego-Fahrzeugs (10) in Abhängigkeit der Vorhersagen der Bewegung des Ego-Fahrzeugs und der benachbarten Fahrzeuge und einer Gesamttrajektorie (T) des Ego-Fahrzeugs (10) bestimmt wird.

4. Verfahren (50) nach einem der vorhergehenden Ansprüche, wobei die Schritte des Verfahrens (50) wiederholt werden, bis eine Möglichkeit zum Spurwechsel gefunden wird.

5. System (12) zur Vorhersage der Trajektorie eines auf einer Hauptspur (1) fahrenden Ego-Fahrzeugs (10), das konfiguriert ist, um einen Spurwechsel des Ego-Fahrzeugs (10) von der Hauptspur (1) auf eine benachbarte Spur (2) in Abhängigkeit von einer Abschätzung des dynamischen Verhaltens einer auf der benachbarten Spur (2) fahrenden Fahrzeuggruppe zu bestimmen, wobei die Fahrzeuggruppe (7) mindestens ein Hauptfahrzeug (6), das sich in unmittelbarer Nähe des Ego-Fahrzeugs (10) befindet, und ein Sekundärfahrzeug (5) umfasst, das sich hinter dem Ego-Fahrzeug hinter dem Hauptfahrzeug (6) in Fahrtrichtung befindet, wobei das System ein Modul (13) zur Erfassung von Positions- (P), Orientierungs- (O) und Geschwindigkeitsinformationen (V) des Ego-Fahrzeugs (10) und der Fahrzeuge (3, 4, 5, 6) der Fahrzeuggruppe (7) umfasst, **dadurch gekennzeichnet, dass** es ein Modul (14) zur Schätzung eines dynamischen Modells pro Paar aufeinanderfolgender Fahrzeuge, die auf der benachbarten Spur (2) fahren, in Abhängigkeit der erfassten Informationen umfasst, wobei das dynamische Modell für aufeinanderfolgende Fahrzeugpaare unter Verwendung eines exogenen autoregressiven Berechnungsmodells durch Bestimmung einer Transferfunktion zweiter Ordnung erhalten wird, die dem Verhalten des Ego-Fahrzeugs in Bezug auf jedes betrachtete aufeinanderfolgende Fahrzeugpaar entspricht.

6. System (12) nach Anspruch 5, umfassend:

   - ein Modul (16) zur Validierung der dynamischen Modelle, die durch Vergleichen eines Fehlers (e(t)) des exogenen autoregressiven Berechnungsmodells mit einem Schwellenwert, der von der tatsächlichen Geschwindigkeit (V(t)) jedes Fahrzeugs zu einem Zeitpunkt (t) und der Geschwindigkeit (V(t-1)) zu einem vorherigen Zeitpunkt (t-1) abhängt, erstellt werden;
   - ein Modul (18) zur Vorhersage der Bewegung der benachbarten Fahrzeuge in Abhängigkeit von dem validierten dynamischen Modell und der Ausgangsposition der Fahrzeuge;
   - ein Modul (20) zur Vorhersage der Bewegung des Ego-Fahrzeugs (10) in Abhängigkeit von der Vorhersage der Bewegung der benachbarten Fahrzeuge und von Informationen, die aus propriozeptiven Sensoren (C) des Ego-Fahrzeugs (10) stammen; und

- ein Modul (22) zur Bestimmung des Spurwechsels des Ego-Fahrzeugs (10) in Abhängigkeit von den Vorhersagen der Bewegung des Ego-Fahrzeugs und der benachbarten Fahrzeuge und einer Gesamttrajektorie (T) des Ego-Fahrzeugs (10).

7. Ego-Fahrzeug (10), umfassend ein Wahrnehmungssystem (11) und ein System (12) zur Vorhersage der Trajektorie des Ego-Fahrzeugs nach einem der Ansprüche 5 oder 6.

**Claims**

1. Method (50) for predicting the trajectory of an ego vehicle (10) travelling in a main lane (1), wherein a lane change by the ego vehicle from the main lane (1) to an adjacent lane (2) is determined according to an estimate of the dynamic behaviour of a group of vehicles travelling in the adjacent lane (2), said group (7) of vehicles comprising at least one main vehicle (6) located in immediate proximity to the ego vehicle (10) and one secondary vehicle (5) located to the rear of said ego vehicle, behind the main vehicle (6) in the direction of travel, wherein position (P), orientation (O) and speed (V) information of the ego vehicle (10) and of the vehicles (3, 4, 5, 6) of the group (7) of vehicles is gathered, **characterized in that** a dynamic model per pair of consecutive vehicles travelling in the adjacent lane (2) is established according to the gathered information, the dynamic model per pair of consecutive vehicles being acquired by determining a second-order transfer function corresponding to the behaviour of the ego vehicle relative to each considered pair of consecutive vehicles using an autoregressive exogenous computation model.

2. Method (50) according to Claim 1, wherein the established dynamic models are confirmed by comparing an error (e(t)) of the autoregressive exogenous computation model with a threshold value dependent on the actual speed (V(t)) of each vehicle at an instant (t) and on the speed (V(t-1)) of said vehicle at a previous instant (t-1).

3. Method (50) according to Claim 2, wherein the movement of the adjacent vehicles is predicted according to the confirmed dynamic model and the initial position of said vehicles, the movement of the ego vehicle (10) is predicted according to the prediction of the movement of the adjacent vehicles and information originating from proprioceptive sensors (C) of the ego vehicle (10) and the lane change by the ego vehicle (10) is determined according to said predictions of the movement of the ego vehicle and of the adjacent vehicles and an overall trajectory (T) of the ego vehicle (10).

4. Method (50) according to any one of the preceding claims, wherein the steps of the method (50) are repeated until a lane change possibility is found.

5. System (12) for predicting the trajectory of an ego vehicle (10) travelling in a main lane (1) configured to determine a lane change by the ego vehicle (10) from the main lane (1) to an adjacent lane (2) according to an estimate of the dynamic behaviour of a group of vehicles travelling in the adjacent lane (2), said group (7) of vehicles comprising at least one main vehicle (6) located in immediate proximity to the ego vehicle (10) and one secondary vehicle (5) located to the rear of said ego vehicle, behind the main vehicle (6) in the direction of travel, the system comprising a module (13) for gathering the position (P), orientation (O) and speed (V) information of the ego vehicle (10) and of the vehicles (3, 4, 5, 6) of the group (7) of vehicles, **characterized in that** it comprises a module (14) for estimating a dynamic model per pair of consecutive vehicles travelling in the adjacent lane (2) according to the gathered information, the dynamic model per pair of consecutive vehicles being acquired by determining a second-order transfer function corresponding to the behaviour of the ego vehicle relative to each considered pair of consecutive vehicles using an autoregressive exogenous computation model.

6. System (12) according to Claim 5, comprising:

- a module (16) for confirming the established dynamic models by comparing an error (e(t)) of the autoregressive exogenous computation model with a threshold value dependent on the actual speed (V(t)) of each vehicle at an instant (t) and on the previous speed (V(t-1)) at a previous instant (t-1);

- a module (18) for predicting the movement of the adjacent vehicles according to the confirmed dynamic model and the initial position of said vehicles;

- a module (20) for predicting the movement of the ego vehicle (10) according to the prediction of the movement of the adjacent vehicles and information originating from proprioceptive sensors (C) of the ego vehicle (10); and

- a module (22) for determining the lane change by the ego vehicle (10) according to said predictions of the movement of the (ego) vehicle and of the adjacent vehicles and an overall trajectory (T) of the ego vehicle (10).

7. Ego motor vehicle (10) comprising a system (11) for perceiving and a system (12) for predicting the trajectory of the ego vehicle according to either one of Claims 5 and 6.

[Fig. 1]

[Fig. 2]

[Fig. 3]

## RÉFÉRENCES CITÉES DANS LA DESCRIPTION

**Documents brevets cités dans la description**

- EP 3056405 A1

- WO 2019204053 A1